**Europäisches Patentamt**

**European Patent Office**

**Office européen des brevets**

(19)

(11) Veröffentlichungsnummer: **0 036 471**
**B1**

(12) # EUROPÄISCHE PATENTSCHRIFT

(45) Veröffentlichungstag der Patentschrift:
**29.06.83**

(51) Int. Cl.³: **C 09 D 5/40**, C 25 D 13/06

(21) Anmeldenummer: **81100384.7**

(22) Anmeldetag: **20.01.81**

(54) **Verfahren zur elektrophoretischen Abscheidung eines Überzuges auf ein als Kathode geschaltetes, elektrisch leitfähiges Werkstück.**

(30) Priorität: **28.01.80 DE 3002865**

(43) Veröffentlichungstag der Anmeldung:
**30.09.81 Patentblatt 81/39**

(45) Bekanntmachung des Hinweises auf die Patenterteilung:
**29.06.83 Patentblatt 83/26**

(84) Benannte Vertragsstaaten:
**AT BE CH DE FR GB IT LI NL SE**

(56) Entgegenhaltungen:
**CHEMICAL ABSTRACTS, Band 90, Nr. 4, Januar 1979,
Seite 82, Nr. 24870t Columbus, Ohio, U.S.A.**

(73) Patentinhaber: **BASF Farben + Fasern
Aktiengesellschaft, Am Neumarkt 30,
D-2000 Hamburg 70 (DE)**

(72) Erfinder: **Diefenbach, Horst, Dr., Lerchenhain 8,
D-4405 Nottuln (DE)**
Erfinder: **Dobbelstein, Arnold, Dr., Emil-Nolde-Weg 95,
D-4400 Münster (DE)**

(74) Vertreter: **Habbel, Hans-Georg, Dipl.-Ing.,
Postfach 3429 Am Kanonengraben 11, D-4400 Münster
(DE)**

Verfahren zur elektrophoretischen Abscheidung eines Überzuges auf ein als Kathode
geschaltetes, elektrisch leitfähiges Werkstück

Die Erfindung bezieht sich auf ein Verfahren zur elektrophoretischen Abscheidung eines Überzuges auf ein als Kathode geschaltetes elektrisch leitfähiges Werkstück aus einem Elektrotauchbad.

Aus der DE-AS 2 248 836 ist ein Verfahren bekannt aus einem Elektrotauchbad, das ein kationisches Harz zusammen mit einem pulverförmigen, nicht ionischen synthetischen Harz enthält, Überzüge auf einer Kathode abzuscheiden. Der pH-Wert dieser Elektrotauchbäder liegt unter 7, in der Regel zwischen 4 und 6. Die Folge eines pH-Wertes im sauren Bereich ist eine verstärkte Korrosion der Anlage in der flüssigen und gasförmigen Phase. Dadurch sind auch die ausserhalb des Beckens befindlichen Anlagenteile starken korrosiven Angriffen ausgesetzt.

Aus den Chemical Abstracts Band 90, Nr. 4, Januar 1979, Seite 82 Nr. 24870 t wird eine Elektrotauchlackierzusammensetzung beschrieben, die das essigsaure Salz eines Reaktionsproduktes von Diethanolamin mit einem Epoxidharz enthält, ferner eindispergiert ein Pulver aus einem hitzehärtbaren Harz und einem thermoplastischen Harz sowie einem blockierten Isocyanat, Titandioxid und Russ. Diese Mischung wird mit Essigsäure auf einen pH-Wert von 4,4 bis 4,5 eingestellt und kann so elektrophoretisch abgeschieden werden.

Ein weiterer Nachteil der bekannten Überzugsmittel liegt darin, dass auf verschieden vorbehandelten Substraten ungleichförmige Überzüge erhalten werden. Ausserdem werden abgelegene Stellen weniger gut beschichtet. Auf Substraten mit waagerechten und senkrechten Flächen werden unterschiedliche Schichtdicken erhalten.

Es ist deshalb Aufgabe der Erfindung, eine verbesserte wässrige Dispersion aus feinteiligem Kunststoff in einem Elektrotauchlackierverfahren als Elektrotauchbad einsetzen zu können, wobei die verschiedenen Nachteile vermieden werden und das Tauchbad ausserdem einen pH-Wert zwischen 7 und 9 aufweisen kann.

Diese Aufgabe wurde überraschenderweise gelöst durch ein Verfahren zur elektrophoretischen Abscheidung eines Überzuges auf ein als Kathode geschaltetes elektrisch leitfähiges Werkstück, dadurch gekennzeichnet, dass man die Abscheidung aus einer wässrigen Dispersion eines mit Säuren protonisierten, aminogruppenhaltigen kationischen Kunstharzes, mindestens eines eindispergierten feinteiligen nicht ionischen Kunststoffes und einem verkappten oder blockierten Isocyanat bei einem pH-Wert zwischen 7 und 9 durchführt.

Die mit Säuren protonisierten, aminogruppenhaltigen kationischen Kunstharze werden im nachfolgenden als Komponente A bezeichnet. Die Komponente B wird durch den feiteiligen, nicht ionischen Kunststoff und die Komponente C durch das verkappte oder blockierte Isocyanat gebildet.

Bevorzugt geeignet sind solche wässrigen Dispersionen, die Pigmente und/oder Füllstoffe und/oder solche wassermischbaren organischen Lösungsmittel enthalten, die die feinteiligen Kunststoffe und das verkappte oder blockierte Isocyanat weder anlösen noch anquellen.

Die feinteiligen nicht ionischen Kunststoffe (Komponente B) können in einer besonders bevorzugten Ausführungsform der Erfindung bereits Pigmente und/oder Füllstoffe enthalten.

Für das erfindungsgemässe Verfahren sind alle drei Komponenten von Bedeutung. Sie lassen sich auf einem Substrat gemeinsam gleichmässig kathodisch abscheiden und ergeben nach kurzer Beschichtungszeit Überzüge bis zu 150 µm. Durch richtige Auswahl der Komponenten A, B und C kann beispielsweise der Verlauf des Überzuges optimiert werden. Nach dem Einbrennen bei Temperaturen bis zu 220°C während einer Einbrenndauer von etwa 15 bis 60 Minuten besitzen die Überzüge hervorragende mechanische Eigenschaften, wie grosse Härte und Kratzfestigkeit bei guter Elastizität und fester Haftung auf dem Substrat. Sie besitzen ausserdem einen ausserordentlich guten Korrosionsschutz. Im Salzsprühtest nach DIN 50021 werden bis zu 1000 Stunden erreicht. Der elektrochemische Wirkungsgrad ist hoch.

Es wurde ferner gefunden, dass die Oberfläche des eingebrannten Überzuges so glatt ist, dass eine einzige Decklackschicht ausreicht, um eine Lackierung mit gutem Aussehen zu erreichen.

Ein besonderer Vorteil des erfindungsgemässen Verfahrens liegt darin, dass sie gleichmässig auch bei einem pH-Wert von über 7 kathodisch abgeschieden werden kann.

Das erfindungsgemässe Verfahren ermöglicht die Beschichtung beliebiger elektrisch leitfähiger metallischer Werkstücke, vorzugsweise Werkstücke aus Eisenmetallen. Die in das Elektrotauchbad eingetauchten zu beschichtenden Werkstücke werden als Kathode geschaltet.

Das aminogruppenhaltige kationische Kunstharz liegt in dem erfindungsgemässen Verfahren in protonisierter Form vor und dient als Trägerharz für die Komponenten B und C. Es wird im folgenden Text als «Trägerharz» bezeichnet. Protonisiert wird das Trägerharz mit geeigneten anorganischen und/oder organischen Säuren, vorzugsweise wasserlöslichen Carbonsäuren und ist in protonisierter Form in Wasser löslich oder dispergierbar bzw. mit Wasser mischbar und verdünnbar. Der pH-Wert der wässrigen Dispersion kann auf einen Wert zwischen 1 und 9 eingestellt werden.

Geeignete Säuren sind praktisch alle bekannten anorganischen und organischen Säuren, wie z.B. Salzsäure, Schwefelsäure, Phosphorsäure, Kohlensäure, p-Toluolsulfonsäure,

Essigsäure, Propionsäure, Ameisensäure, Zitronensäure, Milchsäure, Äpfelsäure, Fumarsäure, Maleinsäure, Phthalsäure sowie die Halbester der Fumarsäure, Maleinsäure und Phthalsäure mit einwertigen oder mehrwertigen aliphatischen Alkoholen, wie Methanol, Äthanol, Propanol, Äthylenglykol. Die besten Ergebnisse werden erhalten mit Essigsäure, Milchsäure und Ameisensäure, die deshalb als bevorzugt geeignete Protonisierungsmittel vorgeschlagen werden.

Das Trägerharz findet seine bevorzugte Verwendung in Überzugsmitteln für die kathodische Elektrotauchlackierung elektrisch leitfähiger Substrate, z. B. von Metallteilen aus Aluminium, Messing, Kupfer, Eisen, Stahl und Eisenlegierungen mit anderen Metallen, die ggf. chemisch vorbehandelt, z. B. phosphatiert sind.

Die in dem erfindungsgemässen Verfahren verwendete wässrige Dispersion enthält als Komponente A aminogruppenhaltige kationische Kunstharze. Als bevorzugt geeignet sind Additionsprodukte eines primären und/oder sekundären Amins mit einem epoxidgruppenhaltigen Harz. Zusammen mit den Komponenten B und B bildet dieses Harz eine wässrige Dispersion, die bei Raumtemperatur beständig ist.

Als epoxidgruppenhaltiges Harz kann eine beliebige monomere oder polymere Verbindung oder eine Mischung solcher Verbindungen verwendet werden, die im Mittel eine oder mehrere Epoxidgruppen pro Molekül enthält. Die harzartigen Epoxidverbindungen mit mehr als einer Epoxidgruppe pro Molekül sind bevorzugt. Eine besonders gut geeignete Klasse von Polyepoxiden sind die Polyglycidyläther von Polyphenolen, wie von Bisphenol A. Man erhält diese z. B. durch Verätherung eines Polyphenols mit Epichlorhydrin oder Dichlorhydrin in Gegenwart von Alkali. Als phenolische Verbindung kommen bei solchen Polyepoxiden z. B. Bis (4--hydroxyphenyl)-2,2-propan, 4,4'-Dihydroxybenzophenol, Bis (4-hydroxyphenyl)-1,1-äthan, Bis (4-hydroxyphenyl)-1,1-isobutan, Bis (4-hydroxy--tert.-butylphenyl)-2,2-propan, Bis (2-hydroxynaphthyl)methan und 1,5-Dihydroxynaphthalin in Betracht. In manchen Fällen ist es vorteilhaft, Polyepoxide mit etwas höheren Molekulargewichten und aromatischen Gruppen zu verwenden. Man erhält sie, indem man den Diglycidyläther mit einem Polyphenol, wie Bisphenol A, umsetzt und dieses Produkt dann weiter mit Epichlorhydrin zu einem Polyglycidyläther umsetzt. Der Polyglycidyläther von Polyphenolen enthält bevorzugt freie Hydroxylgruppen zusätzlich zu den Epoxidgruppen.

Die Polyglycidyläther der Polyphenole können als solche verwendet werden, doch ist es häufig vorteilhaft, einen Teil der reaktionsfähigen Stellen, (Hydroxylgruppen oder in manchen Fällen Epoxidgruppen) mit einem modifizierenden Material umzusetzen, um die Filmeigenschaften des Harzes zu modifizieren. Für eine derartige Umsetzung kommt die Veresterung mit Carbonsäuren, insbesondere Fettsäuren und/oder die Verätherung mit Mono- oder Polyalkoholen in Betracht, die gut bekannt sind. Besonders geeignete Carbonsäuren sind gesättigte Fettsäuren und insbesondere Pelargonsäure. Geeignete Polyalkohole sind Äthylenglykol, Propylenglykol, Butandiol-1,2 oder 1,4, Hexandiol, Neopentylglykol, Dimethylolcyclohexan, Perhydrobisphenol A, ferner Polyester, wie z. B. vorzugsweise lineare Polyester mit endständigen OH-Gruppen. Ausserdem können die Epoxidharze mit isocyanatgruppenhaltigen organischen Materialien oder anderen reaktionsfähigen organischen Materialien modifiziert werden.

Eine andere Gruppe von geeigneten Polyepoxiden erhält man aus Novolaken oder ähnlichen Polyphenolharzen.

Auch die Polyglycidyläther von mehrwertigen Alkoholen sind geeignet. Als Beispiele derartiger mehrwertiger Alkohole seien Äthylenglykol, Diäthylenglykol, Triäthylenglykol, 1,2-Propylenglykol, 1,4-Propylenglykol, 1,5-Pentandiol, 1,2,6-Hexantriol, Glycerin, Bis(4-hydroxycyclohexyl)-2,2-propan genannt. Es können auch Polyglycidylester von Polycarbonsäuren verwendet werden, die man durch die Umsetzung von Epichlorhydrin oder ähnlichen Epoxidverbindungen mit einer aliphatischen oder aromatischen Polycarbonsäure, wie Oxalsäure, Bernsteinsäure, Glutarsäure, Terephthalsäure, 2,6-Naphthalindicarbonsäure und dimerisierte Linolensäure, erhält. Beispiele sind Glycidyladipat und Glycidylphthalat.

Geeignet sind ferner Copolymerisate von ungesättigten Verbindungen, die eine Epoxidgruppe enthalten, z. B. Glycidylmethacrylat, Glycidylacrylat, N-Glycidylacrylamid, Allylglycidyläther und N-Glycidylmethacrylamid, mit einem anderen ungesättigten Monomeren, das damit copolymerisierbar ist.

Wie bereits festgestellt wurde, werden die epoxidgruppenhaltigen Materialien mit einem Amin unter Bildung eines Additionsproduktes umgesetzt. Das verwendete Amin kann primär oder sekundär sein, wobei sekundäre Amine sich besonders gut eignen. Bevorzugt sollte das Amin eine in Wasser lösliche Verbindung sein. Beispiele solcher Amine sind Mono- und Dialkylamine, wie Methylamin, Äthylamin, Propylamin, Butylamin, Dibutylamin, Dimethylamin, Diäthylamin, Dipropylamin, Diisopropylamin, Methylbutylamin, Dibutylamin, Diäthanolamin, Diamylamin, Diisopropanolamin, Äthylaminoäthanol, Äthylaminoisopropanol, Äthanolamin, Äthylendiamin, Diäthylentriamin, Methylcyclohexylamin, Dicyclohexylamin.

In den meisten Fällen werden niedermolekulare Amine verwendet, doch ist es auch möglich, höhermolekulare Monoamine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Die Umsetzung des Amins mit der epoxidgruppenhaltigen Verbindung tritt häufig schon beim Vermischen dieser Materialien ein. Es kann aber gegebenenfalls eine Erwärmung auf mässig erhöhte Temperaturen wünschenswert sein, z. B. auf 50° bis 150°C, doch sind Umsetzungen auch bei niedrigeren und höheren Temperaturen möglich. Häufig ist es vorteilhaft zur Beendigung der Umsetzung die Temperatur gegen das Ende der Reaktion mindestens geringfügig für eine ausreichende Zeit zu erhöhen, um eine vollständige Umstellung sicherzustellen.

Für die Umsetzung mit der epoxidgruppenhaltigen Verbindung sollte mindestens eine solche Menge an Amin verwendet werden, dass das Harz einen kationischen Charakter annimmt, d.h. dass es unter dem Einfluss einer Spannung in dem Elektrotauchbad zu der Kathode wandert, wenn es durch Zugabe einer Säure löslich gemacht worden ist. Es können im wesentlichen alle Epoxidgruppen des Harzes mit einem Amin umgesetzt werden. Es ist aber auch möglich, überschüssige Epoxidgruppen in dem Harz zu belassen, die bei der Berührung mit Wasser unter Bildung von Hydroxylgruppen hydrolisieren.

Der gesamte Aufbau des aminogruppenhaltigen kationischen Kunstharzes erlaubt nach seiner Protonisierung mit Säuren als Trägerharz zu gewährleisten, dass feinteilige nicht ionische Kunststoffe in ihm so verteilt werden können, dass auch bei einem pH-Wert von über 7 stabile wässrige Dispersionen entstehen, aus denen die kathodische Abscheidung der Überzüge bei diesen pH-Werten zwischen 7 und 9 vorgenommen werden kann.

Das Trägerharz ist in seiner protonisierten Form mit Wasser verdünnbar. Nach Bedarf können zusätzliche Lösungsmittel, die aber so ausgewählt sein müssen, dass sie den feinteiligen nicht ionischen Kunststoff weder anlösen noch anquellen, mit enthalten sein, wie beispielsweise Alkohole, wie Isopropanol, Propanol, Butanol, Glykole, Glykoläther, wie Äthylenglykol, Propylenglykol, Äthylenglykol-mono-äthyläther, Äthylenglykol-mono-propyläther, Äthylenglykol-mono-butyläther oder auch andere wie Tetrahydrofuran, aliphatische und/oder aromatische Kohlenwasserstoffe, Ester, Äther, Ätherester, um die Lösungseigenschaften und Dispergiereigenschaften des Trägerharzes günstig zu beeinflussen.

Als Komponente B enthält die wässrige Dispersion feinteilige nicht ionische Kunststoffe eindispergiert. Die feinteiligen nicht ionischen Kunststoffe werden im folgenden Text als «Kunststoffpulver» bezeichnet. Sie haben in der Form der Pulverlacke bereits Eingang in die Lackierung von Metallobjekten gefunden. Diese Kunststoffpulver sind bei Raumtemperatur bis zu Temperaturen von 100°C fest und gut mahlbar. Sie sind nicht reaktiv in der Art, dass sie bereits bei Raumtemperatur mit sich selbst oder mit anderen verträglichen Harzen, wie dem kationischen Trägerharz, zu hochmolekularen Stoffen verfilmen. Bei den üblichen Einbrennbedingungen, die zwischen 140°C und 220°C, vorzugsweise oberhalb 160°C liegen, schmelzen sie jedoch und verbinden sich mit dem kationischen Trägerharz auf dem beschichteten Substrat zu einem verträglichen Film.

Als feinteilige nicht ionische Kunststoffe eignen sich im Rahmen dieser Erfindung Kunststoffpulver aus der Gruppe der Epoxidharze, Polyesterharze, Acylatharze, Polyurethanharze, Polyamidharze, Polyäthylen, Polypropylen und Celluloseacetobutyrate. Diese Kunststoffpulver sind sämtlich bekannt und zum grössten Teil handelsüblich.

Sämtliche Pulver dieser Art sind in der erfindungsgemässen wässrigen Dispersion einsatzfähig, vorausgesetzt, dass sie mit dem Trägerharz verträglich sind. Eine Unverträglichkeit lässt sich leicht daran erkennen, dass sich der Überzug beim Einbrennen in zwei Schichten trennt.

Das Kunststoffpulver kann in dieser Form in der wässrigen Dispersion dispergiert sein. Es ist aber auch möglich, ein Kunststoffpulver zu verwenden, das Füllstoffe enthält. In diesem Fall sind die Pigmente und/oder Füllstoffe bei der Herstellung des Kunststoffpulvers bereits in dieses miteingearbeitet worden. Die wässrige Dispersion kann dann selbst frei von Pigmenten sein.

Die wässrige Dispersion ist nicht allein darauf beschränkt, dass sie nur ein einziges nicht ionisches synthetisches Harz enthält. Es können auch Gemische von zwei und mehr verschiedenen Kunststoffpulvern enthalten sein. Hierbei kann das eine oder andere Kunststoffpulver Pigmente und/oder Füllstoffe enthalten, das andere aber frei von diesen Zusatzstoffen sein.

Die zum Einsatz gelangenden Kunststoffpulver können ausser den Pigmenten und Füllstofen noch geringe Mengen von Härtungsmitteln und andere Zusatzstoffe, die das Fliessverhalten des Pulvers während des Einbrennens regulieren, enthalten. Diese in das Kunststoffpulver eingearbeiteten Zusätze können in ihrer Wirkung nicht durch die wässrige Dispersion negativ beeinflusst werden.

Als Komponente C enthält die wässrige Dispersion ein bei Einbrenntemperaturen mit den Komponenten A und B unter Vernetzung reagierendes verkapptes oder blockiertes Isocyanat. Als verkapptes oder blockiertes Isocyanat kann ein beliebiges Isocyanat verwendet werden, bei dem die Isocyanatgruppen mit einer Verbindung in der Weise umgesetzt worden sind, dass das gebildete verkappte Isocyanat gegenüber Hydroxyl- oder Aminogruppen bei Raumtemperatur beständig ist, mit diesen Gruppen aber bei erhöhten Temperaturen reagiert. Unter blockierten Isocyanaten werden Umsetzungsprodukte verstanden von Monoisocyanaten, z. B. Phenylisocyanat, Butylisocyanat, Vinylisocyanat oder Polyisocyanaten, vorzugsweise Diisocyanaten, wie Toluylendiisocyanaten, Xylylendiisocyanaten, Trimethylendiisocyanat, Tetramethylendiisocyanat, Hexamethylendiisocyanat, oder Diphenylmethandiisocyanat bzw. dessen vollständig oder partiell hydrierte Produkte mit Alkoholen, Polyolen oder Polyätherpolyolen, 1,4-Cyclohexan- und 1,2-Cyclohexandiisocyanat, m-Phenylendiisocyanat, 1,4-Naphthalindiisocyanat, 4,4-Diphenylenmethandiisocyanat.

Als Blockierungsmittel kommen aliphatische, cycloaliphatische oder alkylaromatische Alkohole oder Phenolverbindungen in Frage, die geradkettig, verzweigt oder ringförmig vorliegen können, wie z. B. Methanol, Äthanol, n-, iso- oder tert.-Butanol, Hexanol, Äthylhexanol, Nonylalkohol, Furfurylalkohol, Phenylcarbinol, Cyclohexanol, Alkylglykole, Alkyldiglykole und Alkyltriglykole. Aber auch andere bekannte Blockierungsmittel, wie Lactame, Ketone, Acetessigester oder Malonester können verwendet werden, ferner Phenolverbindungen, wie Phenol selbst, substituierte Phenole, deren Substituenten die Beschichtung nicht nachteilig beeinflussen, wie Cresol und Xylenol. Falls gewünscht, können geringe Mengen auch von höher molekularen, relativ schwer flüchtigen Monoalkoholen verwendet werden, die als Weichmacher in den Beschichtungen dienen. Weitere Verkappungsmittel sind tertiäre Hydroxyamine, wie Diäthanolamin und Oxime, wie Methyläthylketonoxim, Acetonoxim und Cyclohexanonoxim. Die Verwendung von Oximen und Phenolen ist besonders vorteilhaft, da spezifische Polyisocyanate, die mit diesen Verkappungsmitteln blockiert worden sind, bei relativ niedriger Temperatur wieder frei werden, ohne dass die Notwendigkeit besteht, einen Katalysator für die Urethanbildung, wie z. B. einen Zinnkatalysator, zuzugeben.

Das Additionsprodukt aus dem organischen Isocyanat und dem Verkappungsmittel bildet sich, indem man eine ausreichende Menge des Verkappungsmittels mit dem organischen Isocyanat umsetzt und dabei darauf achtet, dass keine freien Isocyanatgruppen übrig bleiben.

Die verkappten Isocyanatgruppen sind bei Raumtemperatur und auch bei leicht erhöhter Temperatur gegen Amino- und insbesondere gegen Hydroxylgruppen beständig, sie reagieren erst bei Temperaturen oberhalb 100°C; bei Einbrenntemperaturen soll der Austausch der Blockierungsmittel gegen Amine, die besonders während der Härtung abgespalten werden, rasch und möglichst vollständig erfolgen.

Wie in anderen Überzugsmitteln üblich kann die wässrige Dispersion ebenfalls elektrophoretisch abscheidbare Hilfsstoffe enthalten, wie beispielsweise Pigmente, Füllstoffe, Härtungskatalysatoren, Mittel zur Verbesserung des Verlaufs, Antischaummittel, Haftverbesserungsmittel und andere.

Für die Qualität des kathodisch abgeschiedenen Überzuges ist das Verhältnis zwischen den Komponenten A, B und C sowie die durchschnittliche Teilchengrösse der Komponente B von Bedeutung.

Zusätzlich zu den Komponenten A, B und C enthält die wässrige Dispersion gegebenenfalls noch Pigmente und/oder Füllstoffe.

Eine wichtige Rolle spielt die Teilchengrösse der Komponente B. Sie soll eine Korngrössenverteilung besitzen, bei der mindestens 95% der Teilchen kleiner als 30 µm sind. Die besten Ergebnisse werden erhalten und darum bevorzugt sind solche Kunststoffpulver, bei denen mindestens 95% der Teilchen kleiner als 10 µm sind. Mit abnehmender Teilchengrösse werden die Kunststoffpulver besser von dem Trägerharz umhüllt. Aus diesem Grunde ist die kathodische Abscheidung von feineren Korngrössen gleichmässiger und einfacher.

Die Herstellung der wässrigen Dispersion erfolgt nach den in der Lackindustrie bekannten Methoden. So kann so gearbeitet werden, dass zunächst die Komponente A und die Komponente C gemischt und mit der Säure ganz oder teilweise neutralisiert wird. Diese Mischung wird anschliessend in Wasser dispergiert. In die so erhaltene Dispersion kann die Komponente B mittels einer hochtourigen Dispergiermaschine direkt eingerührt werden.

Eine andere Möglichkeit besteht darin, die Komponente B und die Komponente C vorzumischen und diese Mischung zusammen mit den gewünschten Pigmenten und/oder Füllstoffen in einer Kugelmühle oder einer Rührwerksmühl gemeinsam in die wässrige Lösung der protonisierten Komponente A einzuarbeiten. Eine andere Möglichkeit besteht darin, die Komponenten B und C getrennt in die wässrige Dispersion der protonisierten Komponete A einzuarbeiten.

Eine weitere Möglichkeit der Herstellung der wässrigen Dispersion besteht darin, eine wässrige Aufschlämmung der Komponente B und/oder der Komponente C direkt in die wässrige Lösung der protonisierten Komponente A einzumischen. Bei dieser Methode entfällt das aufwendige Vermahlen mittels Sandmühle, Dreiwalze oder Rührwerksmühle.

Die Eigenschaften der wässrigen Dispersion lassen sich durch die chemische Natur der Komponenten A, B und C sowie durch deren Mengenverhältnis in weiten Bereichen variieren und den Erfordernissen der Praxis anpassen. Es ist auf diese Weise möglich, den pH-Wert der Dispersion durch geeignete Wahl der Komponente A leicht auf Werte über 7 einzustellen.

Um die Herstellung der wässrigen Dispersion zu erleichtern, kann die Einarbeitung der festen Komponente in Gegenwart geringer Mengen von Emulgatoren erfolgen. Geeignet sind beispielsweise solche nicht ionischer Art vom Typ der Äthylenoxidaddukte verschiedener Kettenlänge, wie z. B. mit Äthylenoxid modifizierte Al-

kylphenole, z. B. das tertiäre Octylphenol, das mit 5 bis 40 Äthylenoxideinheiten modifiziert ist. Ausserdem mit Äthylenoxid modifizierte höhere aliphatische Alkohole wie z. B. Laurylalkohole mit 15 bis 50 Äthylenoxideinheiten sowie ähnlich modifizierte langkettige Mercaptane, Fettsäuren oder Amine. Bevorzugt werden Gemische aus mindestens zwei Äthylenoxidaddukten, deren Äthylenoxideinheiten verschiedene Werte aufweisen.

Geeignet sind ausserdem kationische Emulgatoren, wie z. B. niedermolekulare OH-gruppenhaltige Aminoverbindungen, die mit organischen oder anorganischen Säuren protonisiert sind.

Die Mengen an Emulgatoren sollen 3 Gewichtsteile, bezogen auf die Menge des Trägerharzes, nicht übersteigen.

Die wässrige Dispersion ist bevorzugt geeignet für die kataphoretische Abscheidung eines Überzuges auf einem elektrisch leitfähigen Substrat, das als Kathode in einem Elektrotauchlackierverfahren geschaltet ist.

Für die Durchführung der kathodischen Abscheidung wird die wässrige Dispersion bis zu einem Festkörpergehalt zwischen 5 und 30%, vorzugsweise zwischen 5 und 15% mit Wasser herab verdünnt. Der pH-Wert liegt zwischen 7 und 9. Während der kathodischen Abscheidung wird die Dispersion bei Temperaturen zwischen 15 und 40°C gehalten. Das zu beschichtende Substrat wird in die Dispersion eingetaucht und als Kathode geschaltet. Als Anode wird Graphit oder Edelmetall verwendet. Zwischen Kathode und Anode lässt man einen Gleichstrom durch das Bad fliessen. Die Abscheidespannung beträgt 20 bis 500 Volt. Es scheidet sich hierbei auf der Kathode ein Überzug ab. Die Abscheidung wird durchgeführt, bis die gewünschte Schichtdicke erreicht ist.

Ein besonderer Vorteil ist es, dass bereits nach kurzer Zeit Schichtdicken auf dem überzogenen Substrat bis zu 150 µm erhalten werden.

Der Überzug wird nach dem Entfernen des Substrates aus dem Tauchbad mit deionisiertem Wasser abgespült und bei Temperaturen zwischen 140°C und 220°C innerhalb von 15 bis 60 Minuten eingebrannt. Mitunter ist es zweckmässig, eine kurze Vortrocknung bei 100°C vor dem Einbrennen vorzuschalten.

Es war überraschend, dass die Komponenten B und C sich zusammen mit dem Trägerharz auf der Kathode abscheiden. Das war nicht zu erwarten, weil Dispersionen, die nur feinteiliges Pulverharz enthalten, sich nicht elektrophoretisch abscheiden lassen. Da das Elektrotauchbad während des Abscheidevorgangs an den Komponenten A, B und C verarmt, ist es notwendig, das Bad um diese Stoffe zu ergänzen, damit die ursprüngliche Zusammensetzung der wässrigen Dispersion stets wieder vorhanden ist.

Die Eigenschaften des eingebrannten Überzuges sind technologisch hervorragend. Die Korrosionsfestigkeit ist überraschend gut und variiert mit der Natur der festen Pulverlacke. Es wird unter Verwendung der erfindungsgemässen wässrigen Dispersion eine sehr hohe Schichtdicke erreicht, was allerdings den Umgriff etwas beeinträchtigt. Die eingebrannte Schicht kann ohne weiteres mit üblichen Lacken weiterlackiert werden.

Die nachfolgenden Beispiele sollen das Wesen der Erfindung erläutern, aber nicht einschränken. Prozentangaben beziehen sich auf Gewichtsprozent; Teile auf Gewichtsteile.

Beispiel 1 (Herstellung einer Komponente A)

In einen Reaktionskolben, der mit Rührer, Thermometer, Stickstoffeinlass und Rückflusskühler versehen ist, werden 960 g eines Epoxidharzes auf Bisphenol A-Basis mit einem Epoxidäquivalentgewicht (480) und 167 g Xylol eingewogen. Diese Mischung wird auf 100°C aufgeheizt und unter Stickstoffatmosphäre werden dann 570 g einer 70%igen Lösung eines Diketimins aus Diäthylentriamin und Methylisobutylketon in Methylisobutylketon und 36,5 g Diäthylamin hinzugegeben. Die Mischung wird eine Stunde bei 110° bis 120°C gerührt und dann abgekühlt. Es entsteht ein aminogruppenhaltiges kationisches Kunstharz mit einem Festkörpergehalt von 80%. Viskosität, gemessen als 50%ige Lösung in Xylol, beträgt 355 mPa.s.

Beispiel 2 (Herstellung einer Komponente B)

In einen Reaktionskolben, versehen mit Rührer, Thermometer, Stickstoffeinlass, Kolonne, Wasserauskreiser und Rückflusskühler werden eingewogen: 664 g Isophthalsäure, 312 g Neopentylglykol, 268 g Trimethylolpropan und 50 g Xylol. Diese Mischung wird langsam unter Stickstoff auf 210°C aufgeheizt, dabei wird Wasser abdestilliert. Die Umsetzung wird geführt bis zu einer Säurezahl von 25, dann wird das Produkt ausgegossen und abgekühlt. Das erhaltene Produkt hat eine OH-Zahl von 180 und einen Erweichungspunkt von 60° bis 64°C. Es wird vorund feingemahlen und durch ein Sieb der Maschenweite 100 µm gesiebt. Die Fraktion unter 40 µm wird zur Herstellung der erfindungsgemässen Überzugsmittel verwendet.

Beispiel 3 (Herstellung einer Komponente C)

Es wird ein Diurethan hergestellt, indem zu 174 g Toluylendiisocyanat langsam 260 g 2-Äthylhexanol, das als Katalysator 2 Tropfen Dibutylzinndilaurat enthält, unter Rühren und äusserer Kühlung so zugegeben werden, dass die Temperatur der Reaktionsmischung unterhalb 90°C gehalten wurde.

Beispiel 4

100 Teile der nach Beispiel 1 hergestellten Komponente A werden mit 30 Teilen der nach Beispiel 3 erhaltenen Komponente C, 0,5 Teilen Dibutylzinndilaurat und 5,5 Teilen Eisessig gemischt. Diese Mischung wird unter Rühren in 585 Teile destilliertes Wasser eindispergiert. Dazu werden 35 Teile der nach Beispiel 2 erhaltenen Komponente B unter gutem Rühren zugegeben. Die so hergestellte Dispersion hat einen Festkörpergehalt von 19% und einen pH-Wert von 8,3.

In diese Dispersion wird ein phosphatiertes Stahlblech eingetaucht und als Kathode geschaltet. Ein eingetauchtes Edelstahlblech wird als Anode geschaltet. Bei Anlegen eines Gleichstromes mit einer Spannung von 200 V und einer Badtemperatur von 20°C wurde auf dem Kathodenblech innerhalb von 20 Sekunden ein Überzug abgeschieden. Nach dem Herausnehmen des mit dem Überzug versehenen Bleches und Abspülen mit vollensalztem Wasser wird 20 Minuten bei 180°C eingebrannt. Es entsteht ein harter geschlossener Film mit einer durchschnittlichen Schichtdicke von 35 μm auf der der Anode zugewandten Blechseite. Der Film ist beständig gegen Methylisobutylketon und war bei der Korrosionsschutzprüfung nach DIN 50021 nach 1000 Std. noch in Ordnung.

## Patentansprüche

1. Verfahren zur elektrophoretischen Abscheidung eines Überzuges auf ein als Kathode geschaltetes elektrisch leitfähiges Werkstück, dadurch gekennzeichnet, dass man die Abscheidung aus einer wässrigen Dispersion eines mit Säuren protonisierten, aminogruppenhaltigen kationischen Kunstharzes, mindestens eines eindispergierten feinteiligen nicht ionischen Kunststoffes und einem verkappten oder blockierten Isocyanat bei einem pH-Wert zwischen 7 und 9 durchführt.

2. Verfahren nach Anspruch 1, dadurch gekennzeichnet, dass die feinteiligen nicht ionischen Kunststoffe Pigmente und/oder Füllstoffe enthalten.

## Claims

1. Process for the electrophoretic deposition of a coating on an electrically conductive workpiece wired as the cathode, characterized in that the deposition is carried out from an aqueous dispersion of a cationic synthetic resin which is protonated with acids and contains amino groups, at least one fine-particled non-ionic plastic dispersed therein and a capped or blocked isocyanate at a pH value of the aqueous dispersion of between 7 and 9.

2. Process according to claim 1, characterized in that the fine-particed non-ionic plastics contain pigments and/or fillers.

## Revendications

1. Procédé pour le dépôt électrophorétique d'un revêtement sur une pièce conductrice de l'électricité connectée comme cathode, caractérisé par le fait que l'on effectue de dépôt en partant d'une dispersion aqueuse d'une résine cationique contenant des groupes amine et protonisée par des acides, d'au moins une matière synthétique non ionique en fines particules incluse dans la dispersion et d'un isocyanate masqué ou bloqué, à un pH compris entre 7 et 9.

2. Procédé selon la revendication 1, caractérisé par le fait que les matières synthétiques non ioniques en fines particules contiennent des pigments et/ou des charges.